# EUROPEAN PATENT APPLICATION

(11) **EP 2 554 712 A1**
(43) Date of publication of application: **06.02.2013**
(21) Application number: 10824331.2
(22) Date of filing: 21.10.2010
(51) Int. Cl.: C23C 26/00, C23F 15/00

(54) **UNDERCOAT FOR PAINTING SYSTEM DISPENSING WITH SURFACE TREATMENTS**

(30) Priority: 22.10.2009 BR PI0904057
(71) Applicant: Ecoprotec Comércio E Prestção De Serviços Ltda, Cep: 25660-003 Petrópolis - RJ (BR)
(72) Inventor: DE MIRANDA, Luiz Roberto, Cep: 25610-150 (BR); DE CARVALHO, Ladimir José, Cep: 23071-090 (BR); PEREIRA, Antônio Carlos Gonçalves, Cep: 25660-003 (BR)
(74) Representative: Johansson, Lars E.
(86) International application number: PCT/BR2010/000347
(87) International publication number: WO 2011/047452

(57) **Abstract**

The present invention provides a coating on the blanket form, with or without addition of adhesive or sticky substance, embedded in corrosion inhibitors and / or metal oxides. This material, hereafter referred to simply as blanket, lends itself and is suitable for application on metal surfaces prior to application of paint systems and without the necessity of preparing the metal surface prior to application and can be applied on the metal surface even in presence of corrosive atmospheres.

## Description

### TECHNICAL FIELD

The innovation proposed of a coating in the form of undercoat or screen, with or without the addition of adhesives or adhesive elements, soaked in corrosion inhibitors and/or metal oxides to be used prior to application of paint systems, without the need preparation of the metal surface even in corrosive atmospheres.

### PRIOR ART

One of the most important factors for good performance of the painting is surface preparation. The inks adhere to metals by physical links, chemical or mechanical being that the first two occur through groups of molecules present in the paint resin which interact with the metal. The mechanical coupling occurs when the associated one of the other two, and implies the need for roughening the surface.

Prepare the surface of the steel means performing operations which permit cleaning and roughness. Cleaning removes foreign materials, such as contamination, oxidation and poorly adhered paint, which could affect the adhesion of new paint. The roughness increases the contact surface and also helps to improve the grip.

The degree of surface preparation depends on the operational constraints, the cost of preparation, time and the available methods, the type of surface and the selection scheme of the ink in the aggressive environment.

However there are limitations when the major surface preparation and application of ink is made in situ as in the case of systems having pipes and / or are in presence of aggressive atmospheres, such as gases, vapors and moisture content among others, that lack of space between the tubes that make up the system makes this preparation unfeasible, requiring stoppage of the whole system with eventual replacement of the pipe section that has the effect of corrosion damage.

### DETAILED DESCRIPTION OF THE INVENTION

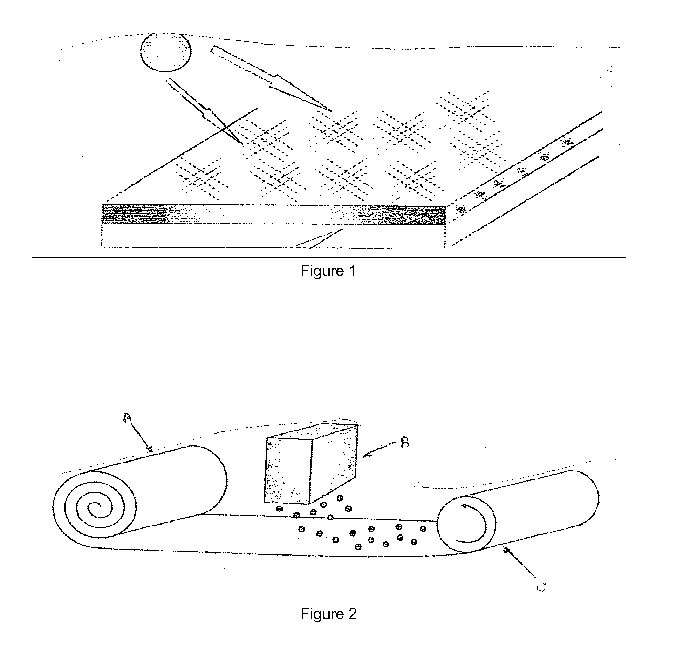

The invention corresponds to an outer pipes in the blanket form, outer, for metal pipe as shown in Figure 1, or a system as shows in Figure 2, which is intended to prevent corrosion thereof can be applied to places subject to moisture vapor and/or corrosive gases and liquids containing, where the blanket is applied directly to the metal surface without the need for removal and / or preparation of the piece, and the said blanket adhesive or not manufactured from material of the base and organic or inorganic fibers embedded in corrosion inhibitors with or without the addition of metal oxides. This process occurs with the passage of the blanket through a bed of corrosion inhibitors that become adherent to the blanket shown in Figure 2.

### APPLICATION

The blanket is applied directly to the metal surface without the need for surface preparation and without removing the part to be protected in the workplace, or this location has a corrosive atmosphere or not. The blanket may be applied separately from the painting system, this being applied before or together with the system, ie already embedded system paint-spraying directly on the metal surface to be protected. The application is similar to apply a common blanket having only careful to observe a small overlap between the turns thereof.

### PAINT SYSTEM

The paint system shall comply with the corrosive environment and possess the properties necessary for adhesion, chemical and electrochemical compatibility with the blanket.

### DESCRIPTION OF FIGURES

Figure 1 show in detail a section of the metal surface with the mantle applied externally and subsequent application of a corrosion inhibitor and / or metal oxides. The mantle coating described provides longitudinal and continuous insulation of the pipes and their connections without interruption and that the system is used as described in Figure 2, which shows one embodiment of the proposed system from the blanket pad of the coating system, where (A) represents the blanket (B) and the reservoir inhibitor (C) the output of the mat embedded in the inhibitor, ready for use.

## Claims

1. Blanket **characterized by** being applied separately from the coating system, with subsequent application of a corrosion inhibitor and / or metal oxides.

2. Blanket system **characterized by** comprising the Blanket (A), a reservoir of corrosion inhibitor (B) output and the Blanket embedded in the inhibitor (E).

3. Blanket according to claim 1-2 **characterized by** being the blanket adhesive or not said mantle and being made of materials based on inorganic or organic fibers, embedded in corrosion inhibitors with or without the addition of metal oxides.

4. Blanket according to claims 1-3 **characterized by** being applied directly to the metal surface, without the need for surface preparation and without the need to remove the part to be protected at the workplace.
